**Europäisches Patentamt**

**European Patent Office**

**Office européen des brevets**

(19)

(11) Veröffentlichungsnummer: **0 099 966**
**B1**

# (12) EUROPÄISCHE PATENTSCHRIFT

(45) Veröffentlichungstag der Patentschrift:
**19.02.86**

(21) Anmeldenummer: **83104440.9**

(22) Anmeldetag: **06.05.83**

(51) Int. Cl.⁴: **G 01 F 1/06**, G 01 F 1/10

(54) **Messeinheit für Durchflusszähler.**

(30) Priorität: **10.05.82 DE 3217503**

(43) Veröffentlichungstag der Anmeldung:
**08.02.84 Patentblatt 84/6**

(45) Bekanntmachung des Hinweises auf die Patenterteilung:
**19.02.86 Patentblatt 86/8**

(84) Benannte Vertragsstaaten:
**AT BE CH FR GB IT LI NL**

(56) Entgegenhaltungen:
**AT - B - 314 217**
**DE - B - 2 354 114**
**DE - B - 2 647 297**

(73) Patentinhaber: **Hydrometer Gesellschaft mbH,
Welserstrasse 13, D-8800 Ansbach (DE)**

(72) Erfinder: **Lacher, Ewald, Dipl.-Ing., Schalkhäuser
Landstrasse 64, D-8800 Ansbach (DE)**
Erfinder: **Rösch, Günther, Stettiner Strasse 5,
D-8806 Neuendettelsau (DE)**

(74) Vertreter: **Patentanwälte Dipl.-Ing. Splanemann
Dipl.-Chem. Dr. B. Reitzner, Tal 13,
D-8000 München 2 (DE)**

ACTORUM AG

## Beschreibung

Die Erfindung betrifft eine Messeinheit für Durchflusszähler für Flüssigkeiten der im Oberbegriff von Anspruch 1 angegebenen Art (AT-B Nr. 314217).

Bei einer bekannten Messeinheit (DE-A Nr. 2836484) ist ein einen Einlass und einen Auslass aufweisendes Messwerkgehäuse vorgesehen, das einen eine zylindrische Innenwand aufweisenden und durch einen Boden verschliessbaren Innenraum hat. In den Innenraum ist ein entsprechend ausgebildeter, einseitig offener und mit einem Boden versehener Messbecher satt eingepasst, der eine Umfangswand hat, die einen Einlass- und einen Auslassschlitz aufweist. Innerhalb des Messbechers ist zwischen dem Boden des Messbechers und einem Zwischenboden des Messwerkgehäuses ein Flügelrad frei drehbar gelagert. In dem Boden und der zylindrischen Umfangswand des Messbechers sind ein Einlasskanal und ein Auslasskanal ausgebildet, die von dem zentralen Bereich des Bodens zu dem als Leiteinrichtung für die Flüssigkeit ausgebildeten Einlassschlitz bzw. dem Auslassschlitz in dem Messbecher geführt sind. In dem zentralen Bereich des Bodens des Messbechers ist zwischen den beiden Bodenabschnitten des oder der Einlass- bzw. Auslasskanäle ein Trennwandelement vorgesehen, das mit einem wandförmigen Einsatz fluchtet, der innerhalb eines T-förmigen Anschlussstücks angeordnet ist, das sich in der Rohrleitung der zu messenden Flüssigkeit befindet, und der innerhalb des Anschlussstücks einen halbkreisförmigen Eingangskanal von einem halbkreisförmigen Ausgangskanal trennt. Die bekannte Messeinheit ist damit für Koaxial-Anschlussstücke ungeeignet. Ausserdem hat die Messeinheit ein ziemlich voluminöses Messwerkgehäuse, da innerhalb des Messwerkgehäuses ein Messbecher angeordnet ist, der innerhalb seines Bodens und seiner Umfangswand Kanäle aufweist, die zu der für die Beaufschlagung des Flügelrades vorgesehenen Leiteinrichtung für die Flüssigkeit führen. Das die Messeinheiten aufnehmende Messwerkgehäuse besteht aus Metall, da der das Gehäuse verschliessende Boden als Reduzierstück ausgebildet ist, so dass das Messwerkgehäuse relativ kostenaufwendig ist. Zum erneuten Eichen muss deshalb das gesamte ausgetauschte Messwerkgehäuse zur Prüfstation gebracht werden. Die nachgeeichte Messeinheit mit dem Messwerkgehäuse ist dann wiederverwendbar.

Auch bei der aus der AT-B Nr. 314217 bekannten Messeinheit ist ein Messwerkgehäuse aus Metall vorgesehen, in das ein Messbecher eingesetzt ist. Der Messbecher hat einen geschlossenen Boden und weist unter radialem Abstand von der Wand des Messwerkgehäuses einen Mantel auf, der sich koaxial zu der Achse des Flügelrades erstreckt und dieses umschliesst sowie mit den Leiteinrichtungen versehen ist, die mehrere Einlassschlitze sowie Auslassöffnungen für die Flüssigkeit umfassen. Dabei stehen die Einlassschlitzen mit Einlasswegen und die Auslassöffnungen mit Auslasswegen in Verbindung, die um den geschlossenen Boden des Messbechers herum geführt sind. Unterhalb des Bodens weist der Messbecher Rippen und Trennwände auf, die den Einlass- und Auslasswegen einen derartigen Verlauf geben, dass sie mit dem Auslasskanal und dem diesen ringförmig umschliessenden Einlasskanal des Koaxial-Anschlussstücks verbunden werden können. Zum Justieren bzw. Eichen muss deshalb das gesamte Messwerkgehäuse einschliesslich des Messbechers und des Zählwerks zur Prüfstation gebracht werden.

Demgegenüber ist es Aufgabe der vorliegenden Erfindung, einen kompakten Durchflusszähler und insbesondere eine kompakte Messeinheit für diesen zu schaffen, die ausserdem als Einweg- bzw. Wegwerfprodukt ausgebildet ist und nach entsprechender Betriebsdauer ein Wegwerfen ohne Nachjustieren bzw. Nacheichen rechtfertigt.

Zur Lösung dieser Aufgabe werden bei einer Messeinheit der eingangs genannten Art erfindungsgemäss die kennzeichnenden Merkmale von Anspruch 1 vorgeschlagen.

Hierdurch wird eine kompakte Messeinheit zur Ermittlung der Warmwasserkostenverteilung oder des Verbrauchs von Trink-, Brauch-, Heiss- oder Heizungswasser geschaffen, wobei sich die kompakte Bauweise durch den Fortfall des Messbechers und die Tatsache ergibt, dass die Einlassöffnung der Messeinheit gleichzeitig und unmittelbar die Leiteinrichtung für die Flüssigkeit zur Beaufschlagung des Flügelrades bildet, wobei nicht nur die Einlass-, sondern auch die Auslassöffnung nur im Boden des Messwerkgehäuses angeordnet sind, das bis auf diese Öffnungen einen geschlossenen Raum bildet, in dem das Flügelrad frei drehbar gelagert ist. Die Messeinheit, insbesondere das Messwerkgehäuse, kann weitgehend aus Kunststoff hergestellt werden und ist deshalb relativ leicht und stellt ein Einweg- bzw. Wegwerfprodukt dar, das nach einer bestimmten Betriebszeit ausgebaut und weggeworfen wird, ohne dass ein erneutes Justieren oder Eichen in einer Prüfstelle erforderlich wäre. Die Messeinheit besteht weitgehend aus Spritzgussteilen, die exakt gefertigt werden können und einen vollständigen Abschluss der Messeinheit gestatten, so dass sie nicht nur in der Fabrik justiert, sondern auch nach der Eichordnung beglaubigt werden kann, so dass eine selbständig eichfähige Messeinheit für einen Durchflusszähler vorliegt. Die Messeinheit genügt auch allen Anforderungen hinsichtlich der Messgenauigkeit innerhalb des vorgegebenen Messbereichs. Durch den vollständigen Fortfall eines Messbechers sind auch die Möglichkeiten zur Bildung von Ablagerungen reduziert. Die Messeinheit ist zweckmässigerweise in Trockenläufer-Bauart ausgeführt.

Die Leiteinrichtung für die Flüssigkeit wird durch die schlitzförmige Einlassöffnung gebildet, die vorzugsweise zur Flügelradachse geneigt ist, wobei die Flügel selbst achsparallel verlaufen. Zweckmässigerweise umfasst die Leiteinrichtung mehrere unter gleichen Winkelabständen angeordnete, schlitzförmige Einlassöffnungen. Auf die Drehrichtung des Flügelrades bezogen ist dann vor diesen jeweils eine radiale Schwelle angeordnet. Die Anlaufkante der Schwelle kann strömungsgünstig ausgebildet sein. Eine entsprechend der Achse des Flügelrades ausgerichtete Anlaufkante einer rippenartigen Schwelle genügt jedoch ebenfalls den Genauigkeitsanforderungen.

Die Höhe der Ringwand ist zweckmässigerweise grösser als die der Schwelle bzw. Schwellen, und zwar vorzugsweise im Verhältnis 60:40.

Die Messeinheit kann unterhalb des Bodens vor der bzw. den Einlassöffnungen ein ringförmiges Sieb aufweisen. Dieses ist zweckmässigerweise an der Messeinheit drehbar gelagert und weist eine Reguliereinrichtung auf, durch die der Durchflusswert der Messeinheit voreinstellbar ist. Die Reguliereinrichtung kann zur Feinjustierung ausgelegt sein. Auf diese Weise wird die Messeinheit selbständig eichfähig und kann nachträglich plombiert werden.

Der Druckverlust der Messeinheit ist besonders niedrig.

Weitere vorteilhafte Ausgestaltungen der Erfindung sind in den übrigen Unteransprüchen unter Schutz gestellt.

In der Zeichnung ist ein Ausführungsbeispiel der Erfindung wiedergegeben, das anhand der nachfolgenden Beschreibung näher erläutert wird. Es zeigt:

Fig. 1 die Messeinheit im Schnitt in Verbindung mit einem Koaxial-Anschlussstück,

Fig. 2 eine Draufsicht des Bodens der Messeinheit,

Fig. 3 eine Abwicklung des Schnitts A-B in Fig. 2,

Fig. 4 eine Draufsicht des ringförmigen Siebes der Messeinheit, und

Fig. 5 eine Seitenansicht des Siebes gemäss Fig. 4.

Ein Koaxial-Anschlussstück 10 bekannter Bauart kann in einer unter Putz verlegten, nicht dargestellten Wasserleitung angeordnet sein. Das Anschlussstück 10 hat einen Einlass 11 und einen Auslass 12 mit einer entsprechenden Rohrverschraubung. An den Einlass 11 schliesst sich ein Eingangskanal 13 an, der ringförmig einen zentralen Ausgangskanal 14 umschliesst, der zu dem Auslass 12 führt.

Der ringförmige Eingangskanal 13 wird so von einer äusseren Gehäusewand 15 und einer Wandung 16 des Ausgangskanals 14 begrenzt. Die Gehäusewand 15 ist länger als die Wandung 16 und hat ein Innengewinde 17. Die Wandung 16 hat eine radiale Abschlussfläche 18, die tiefer liegt als der obere freie Rand der Gehäusewand 15.

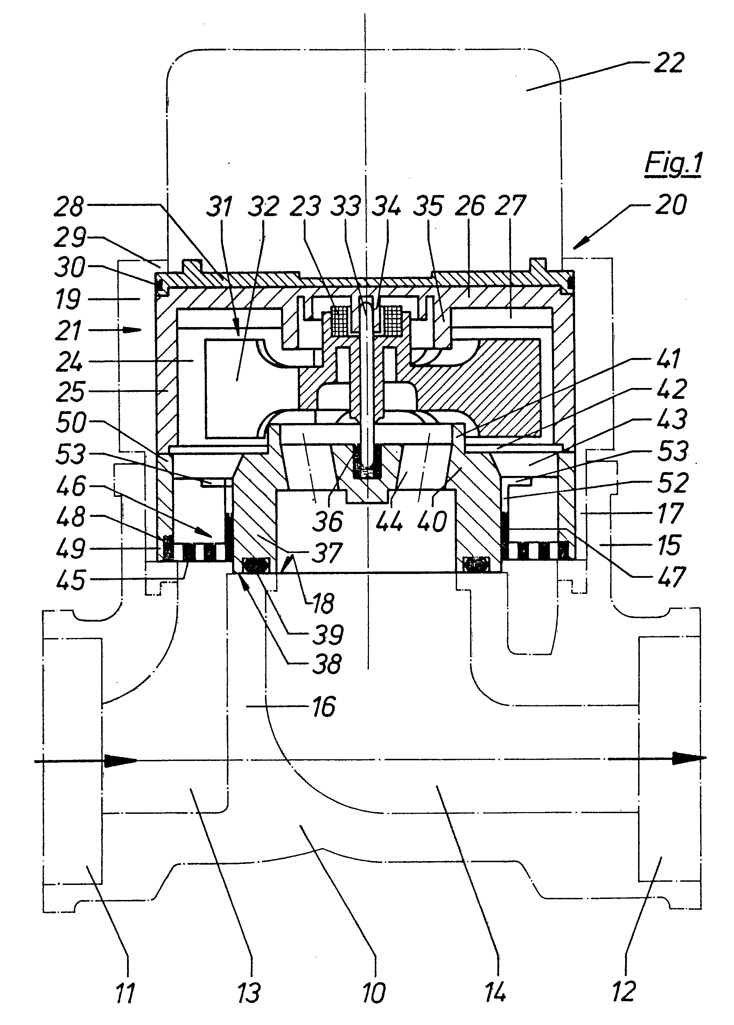

Mit dem Innengewinde 17 steht eine zylindrische Überwurfmutter 19 aus Metall in Eingriff, die eine Messeinheit 20 mit dem Koaxial-Anschlussstück 10 verbindet. Die Messeinheit 20 besteht aus einem Messwerk 21 und einem Zählwerk 22. Das Zählwerk 22 kann ein Rollen- und/oder Zeigerzählwerk bekannter Bauart sein, das bei dem dargestellten Ausführungsbeispiel in Trockenläufer-Bauart über eine Magnetkupplung angetrieben wird, von der der Antriebsmagnet 23 in Fig. 1 gezeigt ist. Dieser kann auch ein elektronisches Zählwerk betätigen.

Das Messwerk 21 hat ein Messwerkgehäuse 24, das aus Kunststoff besteht und dessen Umfangswand 25 satt in die Bohrung der Überwurfmutter 19 passt. Das Messwerkgehäuse 24 hat einen oben liegenden Zwischenboden 26 mit radial verlaufenden Staurippen 27. Der Zwischenboden 26 ist vollständig durch eine Zwischenplatte 28 abgedeckt, die zweckmässigerweise aus Metall besteht und deren äusserer freier Umfangsrand von einem Flansch 29 der Überwurfmutter 19 übergriffen wird. Der Flansch 29 hat eine zentrale Bohrung, durch die das Gehäuse des Zählwerks 22 hindurchragt. In der Umfangswand der Zwischenplatte 28 ist eine Ringnut zur Aufnahme einer Dichtung 30 ausgebildet, die etwaiges aus dem Eingangskanal 13 durch die Passung zwischen der Überwurfmutter 19 und der Umfangswand 25 hindurchtretendes Wasser zurückhält.

Das Messwerk 21 weist ein Flügelrad 31 auf, das zahlreiche Flügel 32 hat, die sich innerhalb des Messwerkgehäuses 24 radial erstrecken und bei diesem Ausführungsbeispiel parallel zu einer Achse 33 des Flügelrades 31 verlaufen. Die Achse 33 ist in einem oberen Lager 34 des Zwischenbodens 26 geführt, das von dem Antriebsmagneten 23 umschlossen ist, der an der Nabe des Flügelrades 31 befestigt ist. Der Antriebsmagnet 23 bzw. die Nabe werden unter radialem Abstand von einer oberen Ringwand 35 umschlossen, die sich axial erstreckend an dem Zwischenboden 26 vorgesehen ist. Zwischen der oberen Ringwand 35 und der äusseren Umfangswand 25 des Messwerkgehäuses 24 erstrecken sich die radialen Staurippen 27. Bei dem dargestellten Ausführungsbeispiel sind unter gleichen Winkelabständen 12 Staurippen 27 vorgesehen, deren Höhe gegenüber der der oberen Ringwand 35 zweckmässigerweise im Verhältnis 40:60 steht.

Das untere Ende der Achse 33 des Flügelrades 31 ist in einer Lagerbuchse 36 geführt, die in einem Boden 40 des Messwerkgehäuses 24 angeordnet ist. Der Boden 40 erstreckt sich parallel zu dem Zwischenboden 26 und hat bei dem dargestellten Ausführungsbeispiel einen zylindrischen Vorsprung 37, dessen Stirnfläche 38 unter Zwischenschaltung eines Dichtungsringes 39 und unter der von der Überwurfmutter 19 aufgebrachten Spannung an der Abschlussfläche 18 der Wandung 16 des Ausgangskanals 14 anliegt.

Der Boden 40 des Messwerkgehäuses 24 weist eine axial in dieses hineinragende Ringwand 41 auf. Ausserdem ist der Boden 40 innerhalb des Messwerkgehäuses 24 mit sich radial erstreckenden Schwellen 42 versehen, die zwischen der Ringwand 41 und der Umfangswand 25 angeordnet sind. Die Höhen der Ringwand 41 und der Schwelle bzw. Schwellen 42 sind zweckmässigerweise im Verhältnis 60:40 ausgelegt. Dabei ragt die Ringwand 41 teilweise in den Umlaufbereich der Flügel 32 des Flügelrades 31. Die Ringwand 41 umschliesst die Achse 33 des Flügelrades 31 unter konstantem radialem Abstand, der jedoch grösser ist als der der oberen Ringwand 35.

Der Boden 40 des Messwerkgehäuses 24 weist die Leiteinrichtung des Messwerks 21 in Form von Einlassöffnungen 43 auf, die unter gleichen Winkelabständen ausserhalb der Ringwand 41 den Boden 40 durchsetzen und sich radial erstrecken sowie schlitzförmig ausgebildet sind. Die Einlassöffnungen 43 befinden sich oberhalb des Eingangskanals 13, während oberhalb des Ausgangskanals 14 Auslassöffnungen 44 innerhalb der Ringwand 41 den Boden 40 durchsetzen.

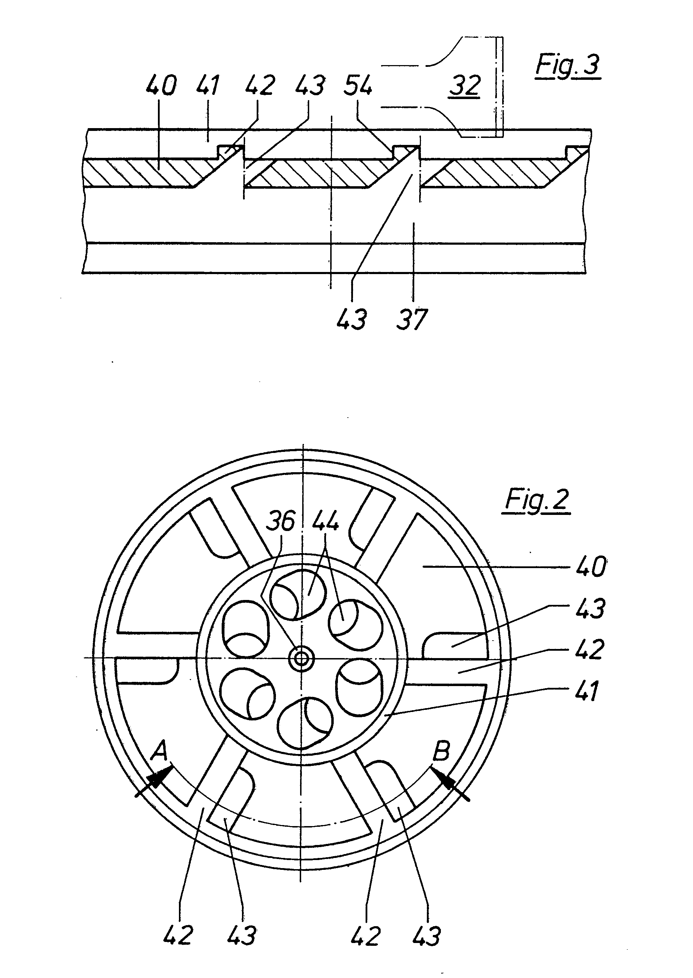

Auf die Drehrichtung des Flügelrades 31 bezogen, ist vor jeder schlitzförmigen Einlassöffnung 43 eine sich radial erstreckende Schwelle 42 vorgesehen (vgl. Fig. 2 und 3).

Unterhalb des Bodens 40 ist zwischen dem ringförmigen Eingangskanal 13 und der bzw. den Einlassöffnungen 43 ein ringförmiges Sieb 45 vorgesehen. Bei dem dargestellten Ausführungsbeispiel ist das Sieb 45 als einstückiger Kunststoff-Spritzgussteil 46 mit einem Lagerring 47 versehen, der auf dem zylindrischen Vorsprung 37 des Bodens 40 drehbar gelagert ist. Der äussere freie Rand des Siebes 45 ist mit einer Rasteinrichtung 48 od. dgl. versehen und in einer Ausnehmung 49 geführt, die an dem unteren freien Rand einer Wand 50 vorgesehen ist. Die Wand 50 fluchtet mit der Umfangswand 25 des Messwerkgehäuses 24 und ist parallel zu dem zylindrischen Vorsprung 37 sowie unter Abstand von diesem an dem Boden 40 ausgebildet.

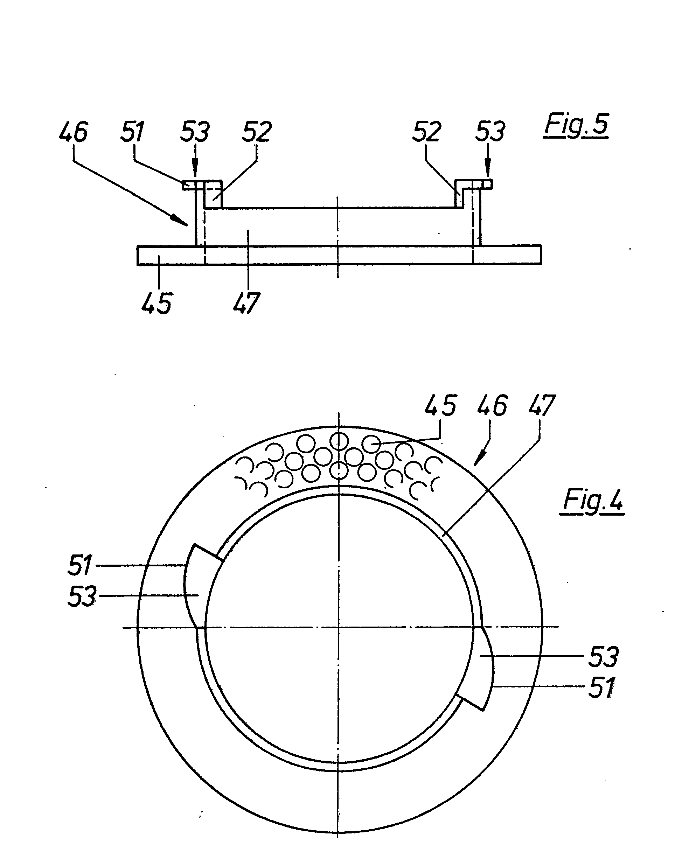

Gemäss Fig. 4 und 5 sind auf den Lagerring 47 zwei Sektoren 53 aufgesetzt, die nach Art von sich radial nach aussen erstreckenden Scheiben ausgebildet sind und zwei der Einlassöffnungen 43 teilweise abdecken können. Zu diesem Zweck ist der freie Rand 51 der Sektoren 53 nach Art einer Kurve ausgebildet, die eine feinfühlige Einstellung der Abdeckung mindestens einer der Eintrittsöffnungen 43 gestattet (Fig. 4). Wie aus Fig. 5 ersichtlich, können die Sektoren 53 unter einem bestimmten Abstand von dem Lagerring 47 an einem Sokkel 52 angeordnet sein.

Die Einstell- bzw. Rasteinrichtung 48, die nur in Fig. 1 angedeutet ist, kann eine enge Verzahnung an dem Sieb 45 und der Wand 50 aufweisen, die es gestattet, vor dem Einbau des Siebes 45 dieses und damit die Sektoren 53 in eine bestimmte Stellung gegenüber der Wand 50 und damit dem Boden 40 bzw. den Einlassöffnungen 43 zu bringen. Andererseits kann die Einstelleinrichtung derart ausgebildet sein, dass der Siebring 46 von aussen verstellbar ist, wobei das Stellorgan nach dem Eichen plombierbar ist. Die Messeinheit 20 bildet dann eine selbständig eichfähige Einheit, insbesondere wenn das Zählwerk 22 mit der Zwischenplatte 28 und dem den Zwischenboden 26, die Umfangswand 25 des Messwerkgehäuses 24 und die Wand 50 des Bodens 40 aufweisenden Messwerk 21 durch Kleben, Schweissen od. dgl. verbunden ist.

Die Ausbildung und Anordnung der Schwellen 42 und der Einlassöffnungen 43 sind aus Fig. 2 und 3 ersichtlich. Bei dem dargestellten Ausführungsbeispiel sind sechs Schwellen 42 auf die Drehrichtung des Flügelrades 31 bezogen jeweils unmittelbar vor einer Einlassöffnung 43 angeordnet. Die Schwellen 42 haben eine achsparallele Anlaufkante 54, die jedoch auch strömungsgünstig ausgebildet sein kann. In beiden Fällen wird oberhalb der schlitzförmigen Einlassöffnung 43 eine freie Entspannungszone geschaffen. Dieser Effekt ist am günstigsten, wenn jede Schwelle in Verlängerung der stromauf weisenden Wand der schlitzförmigen Einlassöffnung 43 angeordnet ist.

Auf die Drehrichtung des Flügelrades bezogen braucht die Schwelle nicht unmittelbar vor der Einlassöffnung 43 angeordnet zu sein. Vielmehr kann sie auch unter einem kurzen Abstand vor dieser auf dem Boden 40 ausgebildet sein, so dass die Entspannungszone an der stromauf weisenden Wand der schlitzförmigen Einlassöffnung 43 eher beginnt. Es besteht auch die Möglichkeit, auf die Drehrichtung des Flügelrades 31 bezogen vor jeder Schwelle 42 eine weitere Schwelle anzuordnen. Diese muss dann jedoch einen ausreichenden Abstand von der stromab weisenden Wand der vorangehenden schlitzförmigen Einlassöffnung 43 haben, um dort die stromabseitige Entspannungszone nicht zu beeinträchtigen.

## Patentansprüche

1. Messeinheit für Durchflusszähler für Flüssigkeiten zum Anschluss an ein einen Auslasskanal (14) und einen diesen ringförmig umschliessenden Einlasskanal (13) aufweisendes Koaxial-Anschlussstück (10), bei der ein Flügelrad (31) innerhalb eines eine Leiteinrichtung für die Flüssigkeit sowie einen Boden (40) aufweisenden Messwerkgehäuses (24) um eine Achse (33) drehbar gelagert ist, das mindestens eine an den Einlasskanal (13) des Anschlussstücks (10) anschliessbare Einlassöffnung (43) und mindestens eine an den Auslasskanal (14) des Anschlussstücks (10) anschliessbare Auslassöffnung (44) aufweist, und bei der an das Messwerkgehäuse (24) ein Zählwerk (22) angeschlossen ist, dadurch gekennzeichnet, dass der Boden (40) des Messwerkgehäuses (24) eine axial in dieses hineinragende Ringwand (41) aufweist, die unter konstantem Abstand die Achse (33) des Flügelrades (31) umschliesst, dass die Einlassöffnung (43) als Leiteinrichtung ausserhalb der Ringwand (41) den Boden (40) durchsetzt, sich radial erstreckt und schlitzförmig ausgebildet ist, dass auf die Drehrichtung des Flügelrades (31) bezogen vor der schlitzförmigen Einlassöffnung (43) eine sich radial erstreckende Schwelle (42) angeordnet ist und dass die Auslassöffnung (44) innerhalb der Ringwand (41) den Boden (40) durchsetzt.

2. Messeinheit nach Anspruch 1, dadurch gekennzeichnet, dass die schlitzförmige Einlassöffnung (43) zur Flügelradachse (33) geneigt ist und die Flügel (32) achsparallel verlaufen.

3. Messeinheit nach Anspruch 1 oder 2, dadurch gekennzeichnet, dass mehrere schlitzförmige Einlassöffnungen (43) unter gleichen Winkelabständen in dem Boden (40) vorgesehen sind, vor denen jeweils eine radiale Schwelle (42) angeordnet ist.

4. Messeinheit nach einem der Ansprüche 1 bis 3, dadurch gekennzeichnet, dass jede Schwelle (42) in Verlängerung der stromauf weisenden Wand der schlitzförmigen Einlassöffnung (43) angeordnet ist.

5. Messeinheit nach einem der Ansprüche 1 bis 4, dadurch gekennzeichnet, dass auf die Drehrichtung des Flügelrades (31) bezogen vor jeder Schwelle (42) eine weitere Schwelle angeordnet ist.

6. Messeinheit nach mindestens einem der Ansprüche 1 bis 5, dadurch gekennzeichnet, dass die Höhe der Ringwand (41) grösser ist als die der Schwelle bzw. Schwellen (42).

7. Messeinheit nach Anspruch 6, dadurch gekennzeichnet, dass die Höhen der Ringwand (41) und der Schwelle bzw. Schwellen (42) im Verhältnis 60:40 ausgelegt sind und die Ringwand (41) teilweise in den Umlaufbereich des Flügelrades (31) eingreift.

8. Messeinheit nach mindestens einem der Ansprüche 1 bis 7, dadurch gekennzeichnet, dass mehrere Auslassöffnungen (44) vorgesehen sind.

9. Messeinheit nach Anspruch 8, dadurch gekennzeichnet, dass die Auslassöffnungen (44) zylindrische Bohrungen sind.

10. Messeinheit nach Anspruch 8 oder 9, dadurch gekennzeichnet, dass jede Auslassöffnung (44) gegenüber den achsparallelen Flügeln (32) des Flügelrades (31) geneigt ist.

11. Messeinheit nach mindestens einem der Ansprüche 1 bis 10, dadurch gekennzeichnet, dass unterhalb des Bodens (40) zwischen dem ringförmigen Eingangskanal (13) und der bzw. den Einlassöffnungen (43) ein ringförmiges Sieb (45) angeordnet ist.

12. Messeinheit nach Anspruch 11, dadurch gekennzeichnet, dass das Sieb (45) auf einem zylindrischen Vorsprung (37) des Bodens (40) drehbar gelagert ist und eine Reguliereinrichtung (48, 53) für mindestens eine Einlassöffnung (43) aufweist.

13. Messeinheit nach Anspruch 12, dadurch gekennzeichnet, dass die Reguliereinrichtung (48, 53) scheibenförmige Sektoren (53) aufweist, die zum verstellbaren Abdecken mindestens einer der Einlassöffnungen (43) ausgebildet und zusammen mit dem Sieb (45) in Umfangsrichtung verstellbar sind.

14. Messeinheit nach mindestens einem der Ansprüche 11 bis 13, dadurch gekennzeichnet, dass in Verlängerung der Umfangswand (25) des Messwerkgehäuses (24) der Boden (40) mit einer Wand (50) versehen ist, die sich parallel zu und unter Abstand von dem zylindrischen Vorsprung (37) erstreckt und in einer Ausnehmung (49) eine Rast- bzw. Einstelleinrichtung (48) zum Halten des Siebes (45) und der Regulier-Sektoren (53) in einer bestimmten Durchlassstellung aufweist.

15. Messeinheit nach mindestens einem der Ansprüche 1 bis 14, dadurch gekennzeichnet, dass das Zählwerk (22) mit der Zwischenplatte (28) und dem den Zwischenboden (26), die Umfangswand (25) des Messwerkgehäuses (24) und die Wand (50) des Bodens (40) aufweisenden Messwerk (21) durch Kleben, Schweissen od. dgl. zu einer Einheit verbunden ist.

## Claims

1. Measuring unit for throughflow meters for liquids for connection to a coaxial connecting piece (10) comprising an outlet passage (14) and an inlet passage (13) annularly surrounding the latter, wherein an impeller (31) is rotatably mounted about an axis (33) within a measuring mechanism housing (24) comprising a guide means for the liquid and a bottom (40), said housing comprising at least one inlet opening (43) connectable to the inlet passage (13) of the connecting piece (10) and at least one outlet opening (44) connectable to the outler passage (14) of the connecting piece (10), and wherein a meter means (22) is connected to the measuring mechanism housing (24), characterized in that the bottom (40) of the measuring mechanism housing (24) comprises an annular wall (41) which projects axially into the latter and which surrounds at constant spacing the axis (33) of the impeller (31), that the inlet opening (43) as guide means outside the annular wall (41) passes through the bottom (40), extends radially and is made in slit form, that with respect to the direction of rotation of the impeller (31) in front of the slit-shaped inlet opening (43) a radially extending sill (42) is disposed and that the outlet opening (44) within the annular wall (41) traverses the bottom (40).

2. Measuring unit according to Claim 1, characterized in that the slit-shaped inlet opening (43) is inclined to the impeller axis (33) and the vanes (32) extend parallel to the axis.

3. Measuring unit according to Claim 1 or 2, characterized in that a plurality of slit-shaped inlet openings (43) are provided at equal angular intervals in the bottom (40), in front of each of which a radial sill (42) is disposed.

4. Measuring unit according to any one of Claims 1 to 3, characterized in that each sill (42) is disposed in the extension of the upstream-directed wall of the slit-shaped inlet opening (43).

5. Measuring unit according to any one of Claims 1 to 4, characterized in that with respect to the direction of rotation of the impeller (31) in front of each sill (42) a further sill is disposed.

6. Measuring unit according to at least one of Claims 1 to 5, characterized in that the height of the annular wall (41) is greater than that of the sill or sills (42).

7. Measuring unit according to Claim 6, characterized in that the heights of the annular wall (41) and sill or sills (42) are in the ratio 60:40 and the annular wall (41) engages partially in the circulating region of the impeller (31).

8. Measuring unit according to at least one of Claims 1 to 7, characterized in that a plurality of outlet openings (44) is provided.

9. Measuring unit according to Claim 8, characterized in that the outlet openings (44) are cylindrical bores.

10. Measuring unit according to Claim 8 or 9, characterized in that each outlet opening (44) is inclined to the axisparallel vanes (32) of the impeller (31).

11. Measuring unit according to at least one of Claims 1 to 10, characterized in that beneath the bottom (40) between the annular inlet passage (13) and the inlet opening or openings (43) an annular screen (45) is disposed.

12. Measuring unit according to Claim 11, characterized in that the screen (45) is rotatably mounted on a cylindrical projection (37) of the bottom (40) and comprises a regulating means (48, 53) for at least one inlet opening (43).

13. Measuring unit according to Claim 12, characterized in that the regulating means (48, 53) comprises disc-shaped sectors (53) which are constructed for adjustable covering of at least one of the inlet openings (43) and adjustable together with the screen (45) in the peripheral direction.

14. Measuring unit according to at least one of Claims 11 to 13, characterized in that in extension of the peripheral wall (25) of the measuring mechanism housing (24) the bottom (40) is provided with a wall (50) which extends parallel to and spaced from the cylindrical projection (37) and in a recess (49) comprises a detent or setting means (48) for holding the screen (45) and the regulating sectors (53) in a predetermined passage position.

15. Measuring unit according to at least one of Claims 1 to 14, characterized in that the meter means (22) is connected to the intermediate plate (28) and the measuring mechanism (21) comprising the intermediate bottom (26), the peripheral wall (25) of the measuring mechanism housing (24) and the wall (50) of the bottom (40) by adhesion, welding or the like to form a unit.

**Revendications**

1. Unité de mesure pour débitmètres à liquides pour le raccordement à un élément de raccordement coaxial (10) présentant un canal d'échappement (14) et un canal d'admission (13) entourant celui-ci annulairement, dans laquelle une roue à ailettes (31) est montée de manière à pouvoir tourner autour d'un axe (33) à l'intérieur d'un carter de dispositif de mesure (24) présentant un dispositif directeur pour le liquide ainsi qu'un fond (40) et qui présente au moins une ouverture d'admission (43) pouvant être raccordée au canal d'admission (13) de l'élément de raccordement (10) et au moins une ouverture d'échappement (44) pouvant être raccordée au canal d'échappement (14) de l'élément de raccordement (10), et dans laquelle un mécanisme compteur (22) est raccordé au carter de dispositif de mesure (24), caractérisée par le fait que le fond (40) du carter de dispositif de mesure (24) présente une paroi annulaire (41) pénétrant axialement dans celui-ci et qui entoure avec un espacement constant l'axe (33) de la roue à ailettes (31), que l'ouverture d'admission (43), en tant que dispositif directeur, traverse le fond (40) à l'extérieur de la paroi annulaire (41), s'étend radialement et est constitué en forme de fente, qu'avant l'ouverture d'admission en forme de fente (43), relativement au sens de rotation de la roue à ailettes (31), est disposé un seuil (42) s'étendant radialement et que l'ouverture d'échappement (44) traverse le fond (40) à l'intérieur de la paroi annulaire (41).

2. Unité de mesure selon la revendication 1, caractérisée par le fait que l'ouverture d'admission en forme de fente (43) est inclinée par rapport à l'axe (33) de la roue à ailettes et que les ailettes (32) sont dirigées parallèlement à l'axe.

3. Unité de mesure selon l'une des revendications 1 ou 2, caractérisée par le fait que dans le fond (40) sont prévues, avec des espacements angulaires égaux, plusieurs ouvertures d'admission en forme de fente (43) devant chacune desquelles est disposé un seuil radial (42).

4. Unité de mesure selon l'une des revendications 1 à 3, caractérisée par le fait que chaque seuil (42) est disposé dans le prolongement de la paroi de l'ouverture d'admission en forme de fente (43) qui est tournée vers l'amont.

5. Unité de mesure selon l'une des revendications 1 à 4, caractérisée par le fait qu'avant chaque seuil (42), relativement au sens de rotation de la roue à ailettes (31), est disposé un autre seuil.

6. Unité de mesure selon l'une des revendications 1 à 5, caractérisée par le fait que la hauteur de la paroi annulaire (41) est plus grande que celle du seuil ou des seuils (42).

7. Unité de mesure selon la revendication 6, caractérisée par le fait que les hauteurs de la paroi annulaire (41) et du seuil ou des seuils (42) sont calculées en un rapport de 60:40 et que la paroi annulaire (41) s'engage partiellement dans la région de rotation de la roue à ailettes (31).

8. Unité de mesure selon l'une des revendications 1 à 7, caractérisée par le fait que plusieurs ouvertures d'échappement (44) sont prévues.

9. Unité de mesure selon la revendication 8, caractérisée en ce que les ouvertures d'échappement (44) sont des perforations cylindriques.

10. Unité de mesure selon l'une des revendications 8 ou 9, caractérisée par le fait que chaque ouverture d'échappement (44) est inclinée relativement aux ailettes (32) parallèles à l'axe de la roue à ailettes (31).

11. Unité de mesure selon l'une des revendications 1 à 10, caractérisée par le fait qu'en dessous du fond (40) est disposé, entre le canal d'entrée annulaire (13) et la ou les ouvertures d'admission (43), un tamis annulaire (45).

12. Unité de mesure selon la revendication 11, caractérisée par le fait que le tamis (45) est monté de manière à pouvoir tourner sur une saillie cylindrique (37) du fond (40) et présente un dispositif de réglage (48, 53) pour au moins une ouverture d'admission (43).

13. Unité de mesure selon la revendication 12, caractérisée par le fait que le dispositif de réglage (48, 53) présente des secteurs en forme de disque (53) qui sont conçus pour recouvrir de façon réglable au moins une des ouvertures d'admission (43) et sont réglables en direction circonférentielle en même temps que le tamis (45).

14. Unité de mesure selon l'une des revendications 11 à 13, caractérisée par le fait que dans le prolongement de la paroi circonférentielle (25) du carter de dispositif de mesure (24), le fond (40) est muni d'une paroi (50) qui s'étend parallèlement à la saillie cylindrique (37) avec espacement et présente, dans un évidement (49), un dispositif d'arrêt ou de réglage (48) pour retenir le tamis (45) et les secteurs de réglage (53) dans une position de passage déterminée.

15. Unité de mesure selon l'une des revendications 1 à 14, caractérisée par le fait que le mécanisme compteur (22) est relié, en un bloc, par collage, soudage ou de façon similaire, à la plaque intermédiaire (28) et au dispositif de mesure (21) présentant le fond intermédiaire (26), la paroi circonférentielle (25) du carter de dispositif de mesure (24) et la paroi (50) du fond (40).

*Fig.1*

_Fig. 3_

_Fig. 2_

Fig.5

Fig.4